# EUROPÄISCHE PATENTSCHRIFT

(11) **EP 3 887 703 B1**
(45) Veröffentlichungstag und Bekanntmachung des Hinweises auf die Patenterteilung: **02.08.2023**
(21) Anmeldenummer: 19808790.0
(22) Anmeldetag: 22.11.2019
(51) Int. Cl.: F16L 37/098

(54) **FLUIDVERBINDUNG**
FLUID CONNECTION
LIAISON DE FLUIDE

(30) Priorität: 28.11.2018 DE 102018220521
(43) Veröffentlichungstag der Anmeldung: 06.10.2021
(73) Patentinhaber: Fränkische Industrial Pipes GmbH & Co. KG, 97486 Königsberg (DE)
(72) Erfinder: SCHRÖTER, Dirk, 96106 Ebern (DE)
(74) Vertreter: Feller, Frank
(86) Internationale Anmeldenummer: PCT/EP2019/082238
(87) Internationale Veröffentlichungsnummer: WO 2020/109165

(56) Entgegenhaltungen:
- EP-A1- 1 422 461
- EP-A1- 2 937 614
- EP-A2- 0 280 180
- EP-A2- 0 961 070

## Beschreibung

Die vorliegende Erfindung betrifft eine Fluidverbindung nach dem Oberbegriff des Anspruchs 1.

Fluidverbindungen zum Verbinden einer ersten Fluidleitung mit einer zweiten Fluidleitung werden von der Anmelderin seit vielen Jahren erfolgreich vertrieben. Dabei hat sich in einigen Anwendungsgebieten wiederholt das Problem ergeben, dass ein Außendurchmesser der Fluidverbindungen zu viel Raum eingenommen hat, um beispielsweise in räumlich sehr begrenzten Anwendungsgebieten, wie beispielsweise innerhalb einer Röhre oder in Leitungsschächten eines Fahrzeugs, angeordnet zu werden, ohne den für die Leitung eines Fluids zur Verfügung stehenden Querschnitt zu reduzieren. Das Dokument EP 0 961 070 A2, welches als nächstliegender Stand der Technik erachtet wird, offenbart eine Fluidverbindung, gemäß welcher ein erster Verbindungskörper und ein zweiter Verbindungskörper mit einem die Verbindungskörper radial außen umgebenden Rastkörper verbunden werden können, wobei einer der Verbindungskörper lösbar mit dem Rastkörper verbindbar ist. Ferner sei auf die Dokumente EP 2 937 614 A1, EP 1 422 461 A1 und EP 0 280 180 A2 hingewiesen.

Daher hat sich die Aufgabe ergeben, eine Fluidverbindung bereitzustellen, welche eine sichere Verbindung von Fluidleitungen miteinander mit einem geringen beanspruchten Bauraum kombinieren kann.

Diese Aufgabe wird erfindungsgemäß durch eine Fluidverbindung nach Anspruch1 gelöst.

Dadurch, dass der Rastkörper an einer Außenseite des entsprechenden Verbindungskörpers mit diesem in Verbindung tritt, das heißt verrastet, kann ein Außendurchmesser der Fluidverbindung, im Vergleich zu herkömmlichen Fluidverbindungen, reduziert werden ohne einen im Inneren der Fluidverbindung angeordneten Leitungsquerschnitt für eine Leitung von Fluid zu reduzieren. Dies ist besonders vorteilhaft, da die Leitungsquerschnitte meist systembedingt vorgegeben sind und daher nicht reduziert werden können. Natürlich kann gegebenenfalls auch der Leitungsquerschnitt bei, im Vergleich zu herkömmlichen Fluidverbindungen, gleichbleibendem Außendurchmesser erhöht werden.

Ein durch die erfindungsgemäße Fluidverbindung erzielbares Verhältnis von Außendurchmesser der Fluidverbindung bzw. des Rastkörpers zu dem für die Leitung eines Fluids zur Verfügung stehenden Durchmesser liegt im Bereich von 2:1 bis 3:1, insbesondere bei etwa 2,5:1. Denkbare Abmessungen hierbei sind ein Außendurchmesser des Rastkörpers von ca. 19 mm und ein freier Durchmesser der in der Fluidverbindung gebildeten Fluidleitung von ca. 8 mm.

Gemäß der vorliegenden Erfindung weist die erste Rasteinrichtung eine erste Untergruppe und eine zweite Untergruppe von in Umfangsrichtung des Rastkörpers an diesem verteilten Rastelementen auf, wobei die erste Untergruppe von der zweiten Untergruppe in einer Richtung, in welcher der Rastkörper auf den ersten Verbindungskörper aufschiebbar ist, zueinander beabstandet angeordnet sind. Der Rastkörper kann so über zwei insbesondere unterschiedlich ausgebildete Untergruppen von Rastelementen mit dem ersten Verbindungskörper verbunden werden. Hierdurch kann eine Anordnung des Rastkörpers am ersten Verbindungskörper verbessert gesichert werden, zum Beispiel, im Vergleich zu einer Ausbildung der ersten Rasteinerichtung mit nur einer Gruppe bzw. Art von Rastelementen, gegen höhere Kräfte, welche in Richtung einer Trennung des Rastkörpers von dem ersten Verbindungskörper wirken.

Dabei sind diejenigen Rastelemente der beiden Untergruppen von Rastelementen, welche bei einer Verbindung von Rastkörper und erstem Verbindungskörper mit dem ersten Verbindungskörper zuerst in Kontakt treten, und diejenigen Rastelemente der Gegenrasteinrichtung an dem ersten Verbindungskörper, welche bei einer Verbindung von Rastkörper und erstem Verbindungskörper mit dem Rastkörper zuerst in Kontakt treten, als Ausnehmungen ausgebildet. In anderen Worten kann die Auswahl der Anordnung von Ausnehmungen und Vorsprüngen, welche bei jeder der Untergruppen von Rastelementen zusammenwirken, derart sein, dass diejenige Untergruppe von Rastelementen des Rastkörpers, welche dem Ende des Rastkörpers, mit welchem der Rastkörper zuerst auf den ersten Verbindungskörper aufgeschoben wird, benachbart angeordnet ist, und diejenige Untergruppe von Rastelementen des Verbindungkörpers, welche dem Ende des Verbindungkörpers, auf welches der Rastkörper zuerst auf den ersten Verbindungskörper aufgeschoben wird, benachbart angeordnet ist, als Ausnehmungen ausgebildet sind. Dadurch kann ein Aufschieben des Rastkörpers auf den ersten Verbindungskörper erleichtert werden.

Vorteilhafterweise kann die zweite Rasteinrichtung als lösbare Schnappverbindung ausgebildet sein, welche wenigstens ein Rastelement und wenigstens eine Grifffläche aufweisen, wobei die Schnappverbindung derart ausgebildet sein kann, dass auf ein Verlagern der wenigstens einen Grifffläche in Bezug auf den Rastkörper nach radial innen hin das wenigstens eine Rastelement nach radial außen verlagert wird. So kann der zweite Verbindungskörper in den Rastkörper eingeschoben werden bis er mit der zweiten Rasteinrichtung in Eingriff tritt und kann durch Druck auf die wenigstens eine Grifffläche, wodurch die zweite Rasteinrichtung außer Eingriff mit dem zweiten Verbindungskörper tritt, wieder aus dem Rastkörper entfernt werden.

Es ist dabei insbesondere denkbar, dass jedes Rastelement der zweiten Rasteinrichtung einem federnden Steg zugeordnet sei kann, welcher in Umfangsrichtung des Rastkörpers von zwei Ausnehmungen begrenzt ist, welche sich über mehr als 80%, insbesondere über mehr als 90%, der Länge des Rastkörpers entlang einer Richtung, in welcher der Rastkörper auf den ersten Verbindungskörper aufschiebbar ist, erstrecken können. Der federnde Steg kann in einer Außenwandung des Rastkörpers gebildet sein, wobei die beiden den federnden Steg begrenzenden Ausnehmungen als Durchgangslöcher ausgebildet sein können.

Die Rastelemente einer der beiden Untergruppen von Rastelementen der ersten Rasteinrichtung können den einen jeweiligen federnden Steg begrenzenden Ausnehmungen benachbart, insbesondere direkt an diese angrenzend, angeordnet sein. Die Rastelemente können auf einer zu dem federnden Steg gegenüberliegenden Seite der den federnden Steg begrenzenden Ausnehmung angeordnet sein. Insbesondere kann die Ausnehmung im Bereich eines derartigen Rastelements von einer sich parallel zu einer Längsmittelachse des Rastkörpers erstreckenden Ausnehmung in eine sich orthogonal dazu, insbesondere in Umfangsrichtung, erstreckende Ausnehmung übergehen.

Insbesondere kann eine radial äußere Fläche eines federnden Stegs an einer im Wesentlichen gleichen radialen Erstreckung angeordnet sein wie eine äußere Umfangsfläche des Rastkörpers. Das heißt, eine in radialer Richtung einen jeweiligen federnden Steg begrenzende innere und/oder äußere Flächen kann/können in Umfangsrichtung bündig zu einer inneren bzw. äußeren Wandung eines Abschnitts des Rastkörpers sein, welcher den die federnden Stege begrenzenden Ausnehmungen benachbart ist.

Die radial innere Fläche eines federnden Stegs kann mit dem jeweils zugeordneten Rastelement über zwei sich im Wesentlichen radial erstreckende Verbindungswände verbunden sein, so dass durch die innere Fläche des federnden Stegs, die beiden Verbindungswände und das Rastelement eine Kastenform gebildet ist. Dies gilt natürlich auch für eine zu einer radialen Richtung parallelen Richtung, d.h. eine Richtung, welche keinen Schnittpunkt zu einer Längsmittelachse aufweist. Ein derartiger Aufbau kann eine Verwindung und damit zum Beispiel ein fehlerhaftes Eingreifen und/oder ein ungewolltes Außereingrifftreten eines Rastelements der zweiten Rasteinrichtung mit dem zweiten Verbindungskörper verhindern.

Ferner können jeweils eine Grifffläche und ein Rastelement an dem Ende des Rastkörpers, an welchem das jeweilige Rastelement angeordnet ist, miteinander verbunden sein. Eine jeweilige Verbindung zwischen Grifffläche und Rastelement kann es erlauben, dass ein Druck auf die wenigstens eine Grifffläche zu dem verbundenen Rastelement übertragen werden kann, so dass ein Eingriff der zweiten Rasteinrichtung gelöst werden kann.

Hierbei kann die Verbindung zwischen einer Grifffläche und einem Rastelement, in einer Schnittebene durch sämtliche Griffflächen und Rastelemente der zweiten Rasteinrichtung gesehen, im Wesentlichen gerade ausgebildet sein. Eine zwischen Grifffläche und Rastelement gerade verlaufende Verbindung kann eine bessere Kraftübertragung erlauben, um das entsprechende Rastelement zu verlagern.

Insbesondere können die Verbindungen zwischen den Griffflächen und den Rastelementen eine Rautenform bilden. Dem wird natürlich zu Grunde gelegt, dass die zweite Rasteinrichtung zwei Griffflächen und zwei Rastelemente umfasst.

In einer Ausführung der erfindungsgemäßen Fluidverbindung können der erste Verbindungskörper und der zweite Verbindungskörper einen im Wesentlichen gleichen Innendurchmesser aufweisen, welcher einen jeweiligen Fluiddurchgang bildet. Dadurch kann eine Strömungscharakteristik des durch die erfindungsgemäße Fluidverbindung strömenden Fluids im Vergleich zu einer Strömungscharakteristik des Fluids in der stromaufwärts mit der Fluidverbindung verbundenen Fluidleitung, im Bereich eines Endes dieser Fluidleitung, im Wesentlichen unverändert bleiben.

Wenigstens der erste Verbindungskörper kann sich in einer Aufschubrichtung des Rastkörpers auf den ersten Verbindungskörper erstreckende Vorsprünge und/oder Ausnehmungen aufweisen, welche dazu eingerichtet sind, mit Gegenabschnitten des Rastkörpers einzugreifen, so dass der Rastkörper relativ zu dem ersten Verbindungskörper zumindest rotatorisch unverlagerbar ist. Es sei darauf hingewiesen, dass der Begriff "unverlagerbar" hier bedeuten soll, dass wesentliche Rotationen, von beispielsweise über 1°, verhindert werden können. Ein gewisses "Spiel", welches fertigungstechnisch nicht mit vertretbarem Aufwand zu vermeiden ist, wird hier nicht als Rotation verstanden. Beispielsweise können die Vorsprünge und/oder Ausnehmungen des ersten Verbindungskörpers als sich von dem Ende des Verbindungskörpers weg erstreckende, zum Beispiel rechteckig geformte, Zinken ausgebildet sein. In einer Ausführungsform können in den Vorsprüngen zur Rotationssicherung zugleich Ausnehmungen zumindest teilweise angeordnet sein, welche einer der Untergruppen der ersten Rasteinrichtung zugeordnet sind.

Der Rastkörper kann ferner einen radial innen angeordneten und konzentrisch zu dem Umfang des Rastkörpers verlaufenden Ring aufweisen, welcher dazu eingerichtet ist, in einem verbundenen Zustand der ersten Rasteinrichtung des Rastkörpers mit dem ersten Verbindungskörper, eine Dichtungsanordnung, welche an dem ersten Verbindungskörper angeordnet ist, gegenüber einer axialen Verlagerung relativ zu dem ersten Verbindungskörper zu sichern. Die Dichtungsanordnung kann zum Beispiel wenigstens ein O-Ring, insbesondere zwei O-Ringe und ein zwischen den O-Ringen angeordnetes Abstandselement, umfassen.

Vorteilhafterweise kann jeweils ein Rastelement der zweiten Untergruppe von Rastelementen der ersten Rasteinrichtung in Umfangsrichtung des Rastkörpers an einer gleichen Position angeordnet sein wie eine Grifffläche der zweiten Rasteinrichtung. Dies kann gewährleisten, dass ein Betätigen der Griffflächen, wie beispielsweise ein Drücken der Griffflächen nach radial innen, nicht zugleich ein Außereingrifftreten der zweiten Untergruppe von Rastelementen der ersten Rasteinrichtung zwischen erstem Verbindungskörper und Rastkörper begünstigt oder hervorruft.

Im Folgenden wird die vorliegende Erfindung anhand von Ausführungsbeispielen mit Bezug auf die begleitenden Zeichnungen in größerem Detail erläutert werden. Es stellt dar:
- Figur 1: eine perspektivische Explosionsansicht einer ersten Ausführungsform einer erfindungsgemäßen Fluidverbindung;
- Figur 2a: eine perspektivische Ansicht der ersten Ausführungsform gemäß Figur 1 in einem montierten Zustand;
- Figur 2b: eine Seitenquerschnittsansicht der Fluidverbindung gemäß Figur 2a; und
- Figur 3: eine perspektivische Ansicht einer zweiten Ausführungsform einer erfindungsgemäßen Fluidverbindung.

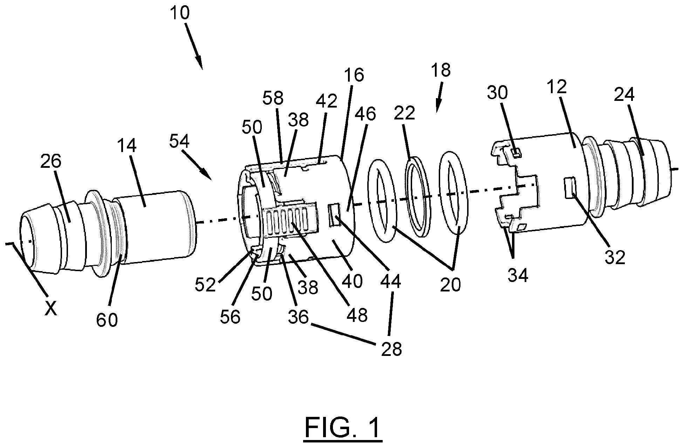

In Figur 1 ist eine erfindungsgemäße Fluidverbindung allgemein mit dem Bezugszeichen 10 bezeichnet. Die Fluidverbindung 10 umfasst einen ersten Verbindungskörper 12, einen zweiten Verbindungskörper 14 und einen Rastkörper 16. Ferner umfasst die Fluidverbindung 10 eine Dichtungsanordnung 18, welche hier zwei O-Ringe 20 und ein Abstandselement 22 umfasst.

Der erste Verbindungskörper 12 und der zweite Verbindungskörper 14 weisen jeweils einen Anschlussabschnitt 24 bzw. 26 auf, mit welchem jeweils eine Fluidleitung verbunden werden kann.

Der Rastköper 16 weist zur Verbindung mit dem ersten Verbindungskörper 12 eine erste Rasteinrichtung 28 auf, welche eine erste und eine zweite Untergruppe von Rastelementen umfasst, welche zum Zwecke des einfacheren Verständnisses weiter unten beschrieben werden. Der erste Verbindungskörper 12 weist entsprechend der ersten Rasteinrichtung 28 Gegenrasteinrichtungen auf, welche hier in dem in Figur 1 dargestellten Ausführungsbeispiel einer erfindungsgemäßen Fluidverbindung 10 als Rastelemente 30 und als Rastelemente 32 ausgebildet sind. Die Rastelemente 30 sind hier als vier Ausnehmungen ausgebildet, welche eine Wandung des ersten Verbindungkörpers 12 durchdringen. Die Rastelemente 30 sind dabei zumindest teilweise im Bereich von Vorsprüngen 34 angeordnet, welche sich in einer Richtung parallel zu einer Längsmittelachse X des ersten Verbindungkörpers 12 erstrecken und einer Rotationssicherung des Rastkörpers 16 an dem ersten Verbindungskörper 12 dienen.

Die Längsmittelachse X bildet in dieser Ausführungsform zugleich eine Längsmittelachse X des zweiten Verbindungkörpers 14 und des Rastkörpers 16 sowie eine Achse X, entlang welcher der erste Verbindungkörper 12 und der Rastkörper 16 bzw. der zweite Verbindungskörper 14 und der Rastkörper 16 miteinander verbunden werden.

Die Ausnehmungen der Rastelemente 30 treten mit an dem Rastkörper 16 angeordneten Vorsprüngen 36 der ersten Untergruppe der ersten Rasteinrichtung 28, von welchen in Figur 1 lediglich zwei zu sehen sind, in Eingriff, sobald der Rastkörper 16 eine entsprechende Position an dem ersten Verbindungkörpers 12 erreicht hat. Entsprechende Abschnitte 38 einer äußeren Wandung 40 des Rastkörpers 16, welche den Vorsprüngen 36 radial außen benachbart sind, sind durch entsprechende Ausnehmungen 42 durch die Wandung 40 derart freigestellt, dass die Abschnitte 38 für eine Verlagerung des Rastkörpers 16 relativ zu dem ersten Verbindungskörper 12, wenn die Vorsprünge 36 des Rastkörpers 16 mit den Vorsprüngen 34 des ersten Verbindungkörpers 12 in Kontakt treten, federnd nach radial außen verlagert werden können.

Die Rastelemente 32 sind hier als zwei sich nach radial außen an dem ersten Verbindungkörper 12 erstreckende Vorsprünge ausgebildet, von welchen in Figur 1 lediglich einer zu sehen ist. Die Vorsprünge der Rastelemente 32 treten an der entsprechenden relativen Position zwischen Rastkörper 16 und erstem Verbindungskörper 12 mit Ausnehmungen 44 der zweiten Untergruppe von Rastelementen der ersten Rasteinrichtung 28, welche hier die Wandung 40 des Rastkörpers 16 durchtreten, in Eingriff. Hierzu kann ein Abschnitt 46 der Wandung 40 des Rastkörpers 16, welcher zwischen einer jeweiligen Ausnehmung 44 und demjenigen Ende des Rastkörpers 16 angeordnet ist, welches zuerst auf den ersten Verbindungkörpers 12 aufgeschoben wird, federnd nach radial außen verlagert werden.

An dem Rastkörper 16 ist ferner eine Grifffläche 48 zu erkennen, welche an dem Ende des Rastkörpers 16, welches mit dem zweiten Verbindungskörper 14 in Verbindung tritt, über zwei Verbindungen 50 mit jeweils einem Rastelement 52 einer zweiten Rasteinrichtung 54 verbunden ist. Die Rastelemente 52 erstrecken sich an dem Rastkörper 16 nach radial innen und sind jeweils über zwei im Wesentlichen radial verlaufende Verbindungswände 56 mit einem federnden Steg 58 verbunden. Der federnde Steg 58 ist über die Ausnehmungen 42 aus der Wandung 40 des Rastkörpers 16 freigestellt, jedoch an seinem dem Rastelement 52 entgegengesetzten Ende mit der Wandung 40 des Rastkörpers 16 verbunden, das heißt hier integral ausgebildet.

An dem zweiten Verbindungskörper 14 ist eine in Umfangsrichtung des Verbindungkörpers 14 verlaufende als Ausnehmung ausgeführte Gegenrasteinrichtung 60 zu erkennen, welche dazu eingerichtet ist, mit der zweiten Rasteinrichtung 54 des Rastkörpers 16 in Eingriff zu treten. Dabei ist die zweite Rasteinrichtung 54 derart ausgebildet, dass der zweite Verbindungskörper 14 in den Rastkörper 16 bis zu einem Eingriff der zweiten Rasteinrichtung 54 mit der Gegenrasteinrichtung 60 eingeschoben werden kann, ohne dass eine oder die Griffflächen 48 des Rastkörpers 16 betätigt werden müssen. Hierzu kann an wenigstens einem aus dem zweiten Verbindungskörper 14, insbesondere an dessen Ende, welches zuerst in den Rastkörper 16 eingeschoben wird, der zweiten Rasteinrichtung 54, insbesondere den Rastelementen 52, und der Gegenrasteinrichtung 60 wenigstens eine Einführschräge vorgesehen sein, welche ein Einführen und/oder Eingreifen des zweiten Verbindungskörpers 14 in den bzw. mit dem Rastkörper 16 erleichtert. Werden die Griffflächen 48 jedoch auf die Längsmittelachse X des Rastkörpers 16 zu verlagert, so bewirken die Verbindungen 50, dass die Rastelementen 52 der zweiten Rasteinrichtung 54 nach radial außen verlagert werden und so außer Eingriff mit der Gegenrasteinrichtung 60 treten. Auf diese Weise kann der zweite Verbindungskörper 14 aus dem Rastkörper 16 zerstörungsfrei gelöst werden.

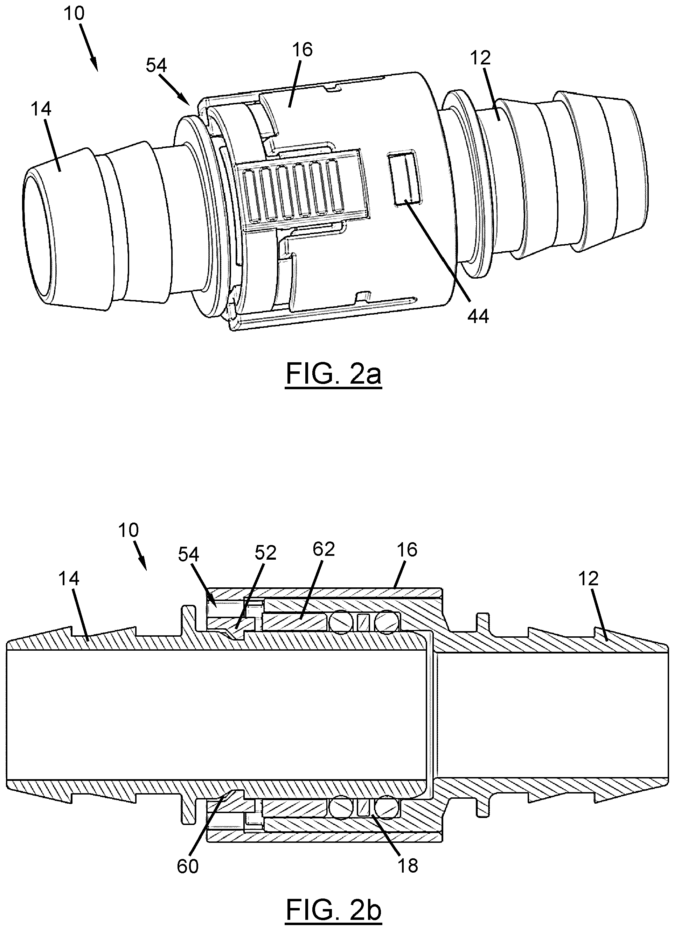

In Figur 2a ist die in Figur 1 gezeigte Ausführungsform der erfindungsgemäßen Fluidverbindung 10 in einem montierten Zustand dargestellt. Dabei ist am Beispiel der zweiten Untergruppe von Rastelementen 44 der ersten Rasteinrichtung 28 zu erkennen, dass die erste Rasteinrichtung 28 von Rastkörper 16 und erstem Verbindungskörper 12 in Eingriff steht. Ferner ist zu erkennen, dass die zweite Rasteinrichtung 54 des Rastkörpers 16 mit dem zweiten Verbindungskörper 14 in Eingriff steht.

In der Seitenquerschnittsansicht von Figur 2b, welche die montierte Fluidverbindung 10 gemäß Figur 2a im Schnitt darstellt, ist zu erkennen, wie die Rastelemente 52 der zweiten Rasteinrichtung 54 des Rastkörpers 16, welcher mit dem ersten Verbindungskörper 12 verbunden ist, mit der Gegenrasteinrichtung 60 des zweiten Verbindungkörpers 14 in Eingriff stehen. Ferner ist in Figur 2b zu erkennen, dass ein innerer Ring 62 des Rastkörpers 16 in Richtung der Dichtungsanordnung 18 vorsteht, um die Dichtungsanordnung 18 zwischen dem Rastkörper 16 und dem ersten Verbindungskörper 12 zu sichern.

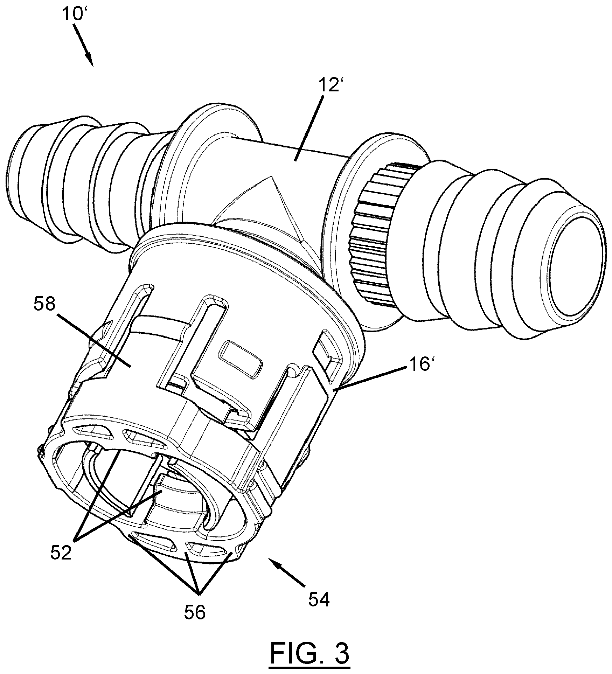

In Figur 3 ist eine zweite Ausführungsform einer erfindungsgemäßen Fluidverbindung 10' dargestellt, welche sich von der Fluidverbindung 10 insbesondere darin unterscheidet, dass ein erster Verbindungskörper 12' in sich zwei im Wesentlichen entgegengesetzt verlaufende Fluiddurchgänge definiert und so zusammen mit einem zweiten Verbindungskörper 14 (nicht dargestellt) ein T-Stück bildet. Daher wird im Folgenden lediglich auf Unterschiede der Fluidverbindung 10' zu der Fluidverbindung 10 eingegangen werden, wobei explizit darauf verwiesen sei, dass sämtliche Vorteile und Merkmale der Fluidverbindung 10 auch auf die Fluidverbindung 10` Anwendung finden und umgekehrt. So werden in Figur 3 zu der Fluidverbindung 10 analoge Elemente mit gleichen Bezugszeichen bezeichnet.

Die beiden durch den ersten Verbindungskörper 12' definierten Fluiddurchgänge können voneinander verschiedene Durchmesser aufweisen, wie beispielsweise 8 mm und 6 mm.

Es ist ferner in Figur 3 zu erkennen, dass die Rastelemente 52 der zweiten Rasteinrichtung 54 mit ihrem jeweiligen federnden Steg 58 über, im Vergleich zu der Fluidverbindung 10, eine weitere Verbindungswand 56 verbunden sind. Es ergibt sich somit eine Art doppelte Kastenform. Hierdurch kann ein Verbindungsbereich eines Verbindungselements 52 mit einem jeweiligen federnden Steg 58, insbesondere in Umfangsrichtung eines Rastkörpers 16', verbreitert werden und dadurch eine Steifigkeit des Rastelements gegenüber dem Rastkörper 16', insbesondere gegenüber dem federnden Steg 58, gesteigert werden.

## Patentansprüche

1. Fluidverbindung (10, 10'), umfassend
- einen ersten Verbindungskörper (12, 12') zur Verbindung der Fluidverbindung (10, 10') mit einer ersten Fluidleitung,
- einen von dem ersten Verbindungskörper (12, 12') getrennt ausgebildeten zweiten Verbindungskörper (14) zur Verbindung der Fluidverbindung (10, 10') mit einer zweiten Fluidleitung, und
- einen Rastkörper (16, 16'), welcher dazu eingerichtet ist, den ersten Verbindungskörper (12, 12') mit dem zweiten Verbindungskörper (14) zu verbinden,
wobei der Rastkörper (16, 16') eine erste Rasteinrichtung (28), welche dazu eingerichtet ist, mit einer entsprechenden Gegenrasteinrichtung (30, 32) an dem ersten Verbindungskörper (12, 12') in Eingriff zu treten, und welche derart ausgebildet ist, dass ein Eingriff der ersten Rasteinrichtung (28) mit der entsprechenden Gegenrasteinrichtung (30, 32) zerstörungsfrei unlösbar ist, und eine zweite Rasteinrichtung (54) aufweist, welche dazu eingerichtet ist, mit einer entsprechenden Gegenrasteinrichtung (60) an dem zweiten Verbindungskörper (14) in Eingriff zu treten, und welche derart ausgebildet ist, dass ein Eingriff der zweiten Rasteinrichtung (54) mit der entsprechenden Gegenrasteinrichtung (60) zerstörungsfrei lösbar ist,
wobei der Rastkörper (16, 16') dazu eingerichtet ist, zum Eingreifen der beiden Rasteinrichtungen (28, 54) sowohl auf eine radial äußere Seite des ersten Verbindungskörpers (12, 12') als auch auf eine radial äußere Seite des zweiten Verbindungskörpers (14) aufgeschoben zu werden,
wobei die erste Rasteinrichtung (28) eine erste Untergruppe (36) und eine zweite Untergruppe (44) von in Umfangsrichtung des Rastkörpers (16, 16') an diesem verteilten Rastelementen (36, 44) aufweist, wobei die erste Untergruppe (36) von der zweiten Untergruppe (44) in einer Richtung (X), in welcher der Rastkörper (16, 16') auf den ersten Verbindungskörper (12, 12') aufschiebbar ist, zueinander beabstandet angeordnet sind, **dadurch gekennzeichnet, dass** diejenigen Rastelemente (44) der beiden Untergruppen von Rastelementen (36, 44), welche bei einer Verbindung von Rastkörper (16, 16') und erstem Verbindungskörper (12, 12') mit dem ersten Verbindungskörper (12, 12') zuerst in Kontakt treten, und diejenigen Rastelemente (30) der Gegenrasteinrichtung (30, 32) an dem ersten Verbindungskörper (12, 12'), welche bei einer Verbindung von Rastkörper (16, 16') und erstem Verbindungskörper (12, 12') mit dem Rastkörper (16, 16') zuerst in Kontakt treten, als Ausnehmungen ausgebildet sind.

2. Fluidverbindung (10, 10') nach Anspruch 1,
**dadurch gekennzeichnet, dass** die zweite Rasteinrichtung (54) als lösbare Schnappverbindung ausgebildet ist, welche wenigstens ein Rastelement (52) und wenigstens eine Grifffläche (48) aufweist, wobei die Schnappverbindung derart ausgebildet ist, dass auf ein Verlagern der wenigstens einen Grifffläche (52) in Bezug auf den Rastkörper (16, 16') nach radial innen hin das wenigstens eine Rastelement (52) nach radial außen verlagert wird.

3. Fluidverbindung (10, 10') nach Anspruch 2,
**dadurch gekennzeichnet, dass** jedes Rastelement (16, 16') der zweiten Rasteinrichtung (54) einem federnden Steg (58) zugeordnet ist, welcher in Umfangsrichtung des Rastkörpers (16, 16') von zwei Ausnehmungen (42) begrenzt ist, welche sich über mehr als 80%, insbesondere über mehr als 90%, der Länge des Rastkörpers (16, 16') entlang einer Richtung (X), in welcher der Rastkörper (16, 16') auf den ersten Verbindungskörper (12, 12') aufschiebbar ist, erstrecken.

4. Fluidverbindung (10, 10') nach Anspruch 3,
**dadurch gekennzeichnet, dass** die Rastelemente (36) einer der beiden Untergruppen von Rastelementen der ersten Rasteinrichtung (28) den einen jeweiligen federnden Steg (58) begrenzenden Ausnehmungen (42) benachbart, insbesondere direkt an diese angrenzend, angeordnet sind.

5. Fluidverbindung (10, 10') nach Anspruch 3 oder 4,
**dadurch gekennzeichnet, dass** eine radial äußere Fläche eines federnden Stegs (58) an einer im Wesentlichen gleichen radialen Erstreckung angeordnet ist wie eine äußere Umfangsfläche (40) des Rastkörpers (16, 16').

6. Fluidverbindung (10, 10') nach einem der Ansprüche 3 bis 5,
**dadurch gekennzeichnet, dass** eine/die radial innere Fläche eines federnden Stegs (58) mit dem jeweils zugeordneten Rastelement (52) über zwei sich im Wesentlichen radial erstreckende Verbindungswände (56) verbunden ist, so dass durch die innere Fläche des federnden Stegs (58), die beiden Verbindungswände (56) und das Rastelement (52) eine Kastenform gebildet ist.

7. Fluidverbindung (10, 10') nach einem der Ansprüche 2 bis 6,
**dadurch gekennzeichnet, dass** jeweils eine Grifffläche (48) und ein Rastelement (52) an dem Ende des Rastkörpers (16, 16'), an welchem das jeweilige Rastelement (52) angeordnet ist, miteinander verbunden sind.

8. Fluidverbindung (10, 10') nach Anspruch 7,
**dadurch gekennzeichnet, dass** die Verbindung zwischen einer Grifffläche (48) und einem Rastelement (52), in einer Schnittebene durch sämtliche Griffflächen (58) und Rastelemente (52) der zweiten Rasteinrichtung (54) gesehen, im Wesentlichen gerade ausgebildet ist.

9. Fluidverbindung (10, 10') nach Anspruch 8,
**dadurch gekennzeichnet, dass** die Verbindungen zwischen den Griffflächen (58) und den Rastelementen (52) eine Rautenform bilden.

10. Fluidverbindung (10, 10') nach einem der Ansprüche 1 bis 9,
**dadurch gekennzeichnet, dass** der erste Verbindungskörper (12, 12') und der zweite Verbindungskörper (14) einen im Wesentlichen gleichen Innendurchmesser aufweisen, welcher einen jeweiligen Fluiddurchgang bildet.

11. Fluidverbindung (10, 10') nach einem der Ansprüche 1 bis 10,
**dadurch gekennzeichnet, dass** wenigstens der erste Verbindungskörper (12, 12') sich in einer Aufschubrichtung (X) des Rastkörpers (16, 16') auf den ersten Verbindungskörper (12, 12') erstreckende Vorsprünge (34) und/oder Ausnehmungen aufweist, welche dazu eingerichtet sind, mit Gegenabschnitten des Rastkörpers (16, 16') einzugreifen, so dass der Rastkörper (16, 16') relativ zu dem ersten Verbindungskörper (12, 12') zumindest rotatorisch unverlagerbar ist.

12. Fluidverbindung (10, 10') nach einem der Ansprüche 1 bis 11,
**dadurch gekennzeichnet, dass** der Rastkörper (16, 16') einen radial innen angeordneten und konzentrisch zu dem Umfang des Rastkörpers (16, 16') verlaufenden Ring (62) aufweist, welcher dazu eingerichtet ist, in einem verbundenen Zustand der ersten Rasteinrichtung (28) des Rastkörpers (16, 16') mit dem ersten Verbindungskörper (12, 12'), eine Dichtungsanordnung (18), welche an dem ersten Verbindungskörper (12, 12') angeordnet ist, gegenüber einer axialen Verlagerung relativ zu dem ersten Verbindungskörper (12, 12') zu sichern.

13. Fluidverbindung (10, 10') nach einem der Ansprüche 2 bis 12, soweit von Anspruch 2 abhängig,
**dadurch gekennzeichnet, dass** jeweils ein Rastelement (44) der zweiten Untergruppe von Rastelementen der ersten Rasteinrichtung (28) in Umfangsrichtung des Rastkörpers (16, 16') an einer gleichen Position angeordnet ist wie eine Grifffläche (58) der zweiten Rasteinrichtung (54).

## Claims

1. Fluid connector (10, 10'), comprising
- a first connector body (12, 12') for connecting the fluid connector (10, 10') to a first fluid line,
- a second connector body (14) formed separately from the first connector body (12, 12') for connecting the fluid connector (10, 10') to a second fluid line, and
- a latching body (16, 16') which is configured to connect the first connector body (12, 12') to the second connector body (14),
wherein the latching body (16, 16') has a first latching device (28), which is configured to engage with a corresponding mating latching device (30, 32) on the first connector body (12, 12') and which is formed in such a manner that engagement of the first latching device (28) with the corresponding mating latching device (30, 32) is non-destructively non-releasable, and a second latching device (54) which is configured to engage with a corresponding mating latching device (60) on the second connector body (14) and which is formed in such a manner that engagement of the second latching device (54) with the corresponding mating latching device (60) is non-destructively releasable, wherein the latching body (16, 16') is configured to be pushed onto both a radially outer side of the first connector body (12, 12') and onto a radially outer side of the second connector body (14) to engage the two latching devices (28, 54), wherein the first latching device (28) has a first subgroup (36) and a second subgroup (44) of latching elements (36, 44) distributed on the latching body (16, 16') in the circumferential direction thereof, wherein the first subgroup (36) and the second subgroup (44) are spaced apart from each other in a direction (X) in which the latching body (16, 16') can be pushed onto the first connector body (12, 12'),
**characterized in that** those latching elements (44) of the two subgroups of latching elements (36, 44), which first come into contact with the first connector body (12, 12') when latching body (16, 16') and first connector body (12, 12') are connected, and/or those latching elements (30) of the mating latching device (30, 32) on the first connector body (12, 12'), which first come into contact with the latching body (16, 16') when latching body (16, 16') and first connector body (12, 12') are connected, are formed as recesses.

2. Fluid connector (10, 10') according to claim 1,
**characterized in that** the second latching device (54) is formed as a releasable snap-in connection which has at least one latching element (52) and at least one gripping surface (48), wherein the snap-in connection is formed in such a manner that on displacing the at least one gripping surface (52) radially inwards with respect to the latching body (16, 16'), the at least one latching element (52) is displaced radially outwards.

3. Fluid connector (10, 10') according to claim 2,
**characterized in that** each latching element (16, 16') of the second latching device (54) is associated with a resilient bar (58) which is delimited in the circumferential direction of the latching body (16, 16') by two recesses (42) which extend over more than 80%, in particular over more than 90% of the length of the latching body (16, 16') along a direction (X) in which the latching body (16, 16') can be pushed onto the first connector body (12, 12').

4. Fluid connector (10, 10') according to claim 5 and according to claim 3,
**characterized in that** the latching elements (36) of one of the two subgroups of latching elements of the first latching device (28) are arranged adjacent to the recesses (42) which delimit a respective resilient bar (58), in particular directly adjoining them.

5. Fluid connector (10, 10') according to claim 3 or 4,
**characterized in that** a radially outer surface of a resilient bar (58) is arranged on a substantially identical radial extension as an outer circumferential surface (40) of the latching body (16, 16').

6. Fluid connector (10, 10') according to one of claims 3 to 5,
**characterized in that** a/the radially inner surface of a resilient bar (58) is connected to the respectively associated latching element (52) via two substantially radially extending connecting walls (56), such that the inner surface of the resilient bar (58), the two connecting walls (56) and the latching element (52) form a box shape.

7. Fluid connector (10, 10') according to one of claims 2 to 6,
**characterized in that** one gripping surface (48) and one latching element (52) each are connected to each other at the end of the latching body (16, 16') on which the respective latching element (52) is arranged.

8. Fluid connector (10, 10') according to claim 7,
**characterized in that** the connection between a gripping surface (48) and a latching element (52), viewed in a sectional plane through all gripping surfaces (58) and latching elements (52) of the second latching device (54), is substantially straight.

9. Fluid connector (10, 10') according to claim 8,
**characterized in that** the connections between the gripping surfaces (58) and the latching elements (52) form a diamond shape.

10. Fluid connector (10, 10') according to one of claims 1 to 9,
**characterized in that** the first connector body (12, 12') and the second connector body (14) have a substantially identical internal diameter which forms a respective fluid passage.

11. Fluid connector (10, 10') according to one of claims 1 to 10,
**characterized in that** at least the first connector body (12, 12') has projections (34) extending in a push-on direction (X) of the latching body (16, 16') onto the first connector body (12, 12') and/or recesses which are configured to engage with mating portions of the latching body (16, 16') such that the latching body (16, 16') is at least rotationally non-displaceable with respect to the first connector body (12, 12').

12. Fluid connector (10, 10') according to one of claims 1 to 11,
**characterized in that** the latching body (16, 16') has a ring (62) arranged radially on the inside and running concentric to the circumference of the latching body (16, 16'), the ring being configured, in a connected state of the first latching device (28) of the latching body (16, 16') to the first connector body (12, 12'), to secure a seal arrangement (18), which is arranged on the first connector body (12, 12'), with respect to axial displacement in relation to the first connector body (12, 12').

13. Fluid connector (10, 10') according to one of claims 2 to 12, insofar as dependent on claim 4,
**characterized in that** one latching element (44) in each case of the second subgroup of latching elements of the first latching device (28) is arranged at a similar position to a gripping surface (58) of the second latching device (54) in the circumferential direction of the latching body (16, 16').

## Revendications

1. Connexion fluidique (10, 10') comprenant
- un premier corps de liaison (12, 12') pour raccorder la connexion fluidique (10, 10') à une première ligne de fluide,
- un deuxième corps de liaison (14) réalisé séparément du premier corps de liaison (12, 12') pour relier la connexion fluidique (10, 10') à une deuxième ligne de fluide, et
- un corps d'encliquetage (16, 16') qui est conçu pour relier le premier corps de liaison (12, 12') au deuxième corps de liaison (14),
dans lequel le corps d'encliquetage (16, 16') comprend un premier dispositif d'encliquetage (28) qui est conçu pour s'engager avec un dispositif d'encliquetage complémentaire correspondant (30, 32) sur le premier corps de liaison (12, 12') et qui est conçu de telle sorte qu'un engagement du premier dispositif d'encliquetage (28) avec le dispositif d'encliquetage complémentaire correspondant (30, 32) ne puisse être libéré sans destruction, et présente un deuxième dispositif d'encliquetage (54) qui est conçu pour s'engager avec un dispositif d'encliquetage complémentaire correspondant (60) sur le deuxième corps de liaison (14) et qui est conçu de telle sorte qu'un engagement du deuxième dispositif d'encliquetage (54) avec le dispositif d'encliquetage complémentaire correspondant (60) puisse être libéré sans destruction,
dans lequel le corps d'encliquetage (16, 16') est conçu pour être poussé à la fois sur un côté radialement extérieur du premier corps de liaison (12, 12') et sur un côté radialement extérieur du deuxième corps de liaison (14) pour l'engagement des deux dispositifs d'encliquetage (28, 54),
dans lequel le premier dispositif d'encliquetage (28) présente un premier sous-groupe (36) et un deuxième sous-groupe (44) d'éléments d'encliquetage (36, 44) répartis sur le corps d'encliquetage (16, 16') dans la direction périphérique de celui-ci, dans lequel le premier sous-groupe (36) est disposé à distance du deuxième sous-groupe (44) dans une direction (X) dans laquelle le corps d'encliquetage (16, 16') peut être enfilé sur le premier corps de liaison (12, 12'), **caractérisé en ce que** les éléments d'encliquetage (44) des deux sous-groupes d'éléments d'encliquetage (36, 44) qui, lors d'une liaison entre le corps d'encliquetage (16, 16') et le premier corps de liaison (12, 12'), entrent en contact en premier avec le premier corps de liaison (12, 12'), et les éléments d'encliquetage (30) du dispositif d'encliquetage opposé (30, 32) sur le premier corps de liaison (12, 12'), qui entrent en contact en premier avec le corps d'encliquetage (16, 16') lors d'une liaison du corps d'encliquetage (16, 16') et du premier corps de liaison (12, 12'), sont réalisés sous forme d'évidements.

2. Connexion fluidique (10, 10') selon la revendication 1,
**caractérisé en ce que** le deuxième dispositif d'encliquetage (54) est réalisé sous forme d'une liaison par encliquetage détachable, qui présente au moins un élément d'encliquetage (52) et au moins une surface de préhension (48), dans lequel la liaison par encliquetage est réalisée de telle sorte que, lors d'un déplacement de ladite au moins une surface de préhension (52) vers l'intérieur dans le sens radial par rapport au corps d'encliquetage (16, 16'), ledit au moins un élément d'encliquetage (52) est déplacé vers l'extérieur dans le sens radial.

3. Connexion fluidique (10, 10') selon la revendication 2,
**caractérisé en ce que** chaque élément d'encliquetage (16, 16') du deuxième dispositif d'encliquetage (54) est associé à une entretoise élastique (58) qui est délimitée dans la direction périphérique du corps d'encliquetage (16, 16') par deux évidements (42) qui s'étendent sur plus de 80 %, en particulier sur plus de 90 %, de la longueur du corps d'encliquetage (16, 16') le long d'une direction (X) dans laquelle le corps d'encliquetage (16, 16') peut être enfilé sur le premier corps de liaison (12, 12').

4. Connexion fluidique (10, 10') selon la revendication 3,
**caractérisé en ce que** les éléments d'encliquetage (36) de l'un des deux sous-groupes d'éléments d'encliquetage du premier dispositif d'encliquetage (28) sont disposés au voisinage des évidements (42) délimitant une entretoise élastique respective (58), en particulier directement adjacents à ceux-ci.

5. Connexion fluidique (10, 10') selon la revendication 3 ou 4,
**caractérisé en ce qu'**une surface radialement extérieure d'une entretoise élastique (58) est disposée sur une extension radiale sensiblement identique à celle d'une surface périphérique extérieure (40) du corps d'encliquetage (16, 16').

6. Connexion fluidique (10, 10') selon l'une des revendications 3 à 5,
**caractérisé en ce qu'**une/la surface radialement intérieure d'une entretoise élastique (58) est reliée à l'élément d'encliquetage (52) respectivement associé par deux parois de liaison (56) s'étendant sensiblement radialement, de sorte qu'une forme de caisson est formée par la surface intérieure de l'entretoise élastique (58), les deux parois de liaison (56) et l'élément d'encliquetage (52).

7. Connexion fluidique (10, 10') selon l'une des revendications 2 à 6,
**caractérisé en ce que** respectivement une surface de préhension (48) et un élément d'encliquetage (52) sont reliés entre eux à l'extrémité du corps d'encliquetage (16, 16') sur laquelle est disposé l'élément d'encliquetage respectif (52).

8. Connexion fluidique (10, 10') selon la revendication 7,
**caractérisé en ce que** la liaison entre une surface de préhension (48) et un élément d'encliquetage (52), vue dans un plan de coupe à travers toutes les surfaces de préhension (58) et tous les éléments d'encliquetage (52) du deuxième dispositif d'encliquetage (54), est réalisée de manière sensiblement droite.

9. Connexion fluidique (10, 10') selon la revendication 8,
**caractérisé en ce que** les connexions entre les surfaces de préhension (58) et les éléments d'encliquetage (52) forment une forme de losange.

10. Connexion fluidique (10, 10') selon l'une des revendications 1 à 9,
**caractérisé en ce que** le premier corps de liaison (12, 12') et le deuxième corps de liaison (14) ont un diamètre intérieur sensiblement identique qui forme un passage de fluide respectif.

11. Connexion fluidique (10, 10') selon l'une des revendications 1 à 10,
**caractérisé en ce qu'**au moins le premier corps de liaison (12, 12') présente des saillies (34) et/ou des évidements s'étendant dans une direction de poussée (X) du corps d'encliquetage (16, 16') sur le premier corps de liaison (12, 12'), qui sont conçus pour s'engager avec des sections opposées du corps d'encliquetage (16, 16'), de sorte que le corps d'encliquetage (16, 16') ne peut pas être déplacé au moins en rotation par rapport au premier corps de liaison (12, 12').

12. Connexion fluidique (10, 10') selon l'une des revendications 1 à 11,
**caractérisé en ce que** le corps d'encliquetage (16, 16') comprend une bague (62) disposée radialement vers l'intérieur et s'étendant concentriquement à la périphérie du corps d'encliquetage (16, 16'), dans lequel la bague (62) est adapté, dans un état connecté du premier moyen d'encliquetage (28) du corps d'encliquetage (16, 16') avec le premier corps de liaison (12, 12'), pour sécuriser un dispositif d'étanchéité (18), qui est disposé sur le premier corps de liaison (12, 12'), contre un déplacement axial par rapport au premier corps de liaison (12, 12').

13. Connexion fluidique (10, 10') selon l'une des revendications 2 à 12, si dépendante de la revendication 2,
**caractérisé en ce qu'**un élément d'encliquetage (44) respectif du deuxième sous-ensemble d'éléments d'encliquetage du premier dispositif d'encliquetage (28) est disposé dans la direction circonférentielle du corps d'encliquetage (16, 16') dans une même position qu'une surface de préhension (58) du deuxième dispositif d'encliquetage.
